# EUROPEAN PATENT APPLICATION

(11) **EP 1 816 377 A1**
(43) Date of publication of application: **08.08.2007**
(21) Application number: 05809156.2
(22) Date of filing: 22.11.2005
(51) Int. Cl.: F16J 15/447, F16C 33/78, F16C 33/80, F16J 15/32

(54) **SEALING DEVICE**

(30) Priority: 25.11.2004 JP 2004339717
(71) Applicant: NOK Corporation, Minato-ku Tokyo 105-8585 (JP)
(72) Inventor: MATSUI, Hiroki, c/o NOK CORPORATION, Fukushima-shi, Fukushima 9601102 (JP); KANZAKI, Go, c/o NOK CORPORATION, Fukushima-shi, Fukushima 9601102 (JP)
(74) Representative: TBK-Patent
(86) International application number: PCT/JP2005/021403
(87) International publication number: WO 2006/057226

(57) **Abstract**

A PAC type sealing device (1) comprising a slinger (2) and a lip member (3), wherein torque due to the sliding movement of an auxiliary lip (5i) is prevented from increasing, the auxiliary lip (5i) is prevented from causing a large lubricating resistance against main lips (5g) and (5h), a turning trouble of the auxiliary lip (5i) is prevented from occurring, and the auxiliary lip (5i) is prevented form being worn due to sliding movement, is provided. The sealing device (1) is formed by combining the slinger (2) installed on one member (21) of two members rotating relatively to each other and the lip member (3) installed on the other member (22). The slinger (2) comprises a mounting part (2a) and a flat surface part (2b) which are formed integrally with each other, and the lip member (3) comprises the main lips (5g and 5h) closely contacted to the end face of the flat surface part (2b) of the slinger (2). The auxiliary lip (5i) with labyrinth structure radially facing the peripheral surface (21a) of the one member (21) is formed at the inside from the main lips (5g and 5h) at a position axially deviated from the mounting part (2a) of the slinger (2).

## Description

### Field of the Invention

The present invention relates to a sealing device in accordance with a sealing technique. The sealing device in accordance with the present invention is used, for example, as a seal for a hub bearing in an automotive associated field, or used as a muddy water seal in an agricultural machinery, a construction equipment, a general purpose machine or the like.

### Description of the Conventional Art

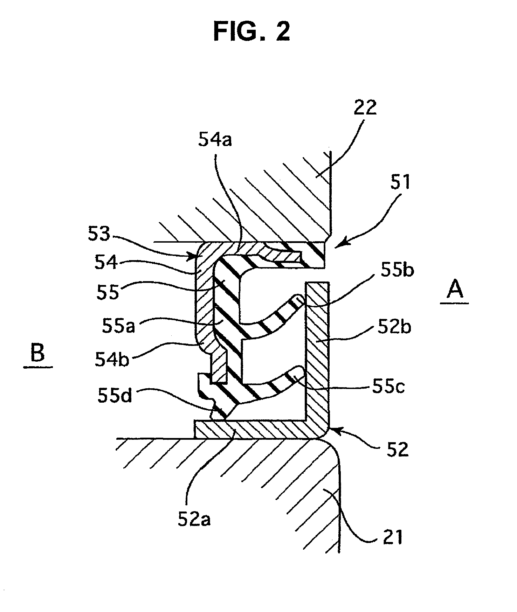

Conventionally, as a seal for a hub bearing used in the automotive associated field, there has been known a PAC type sealing device (PAC seal) 51 shown in Fig. 2, and the sealing device 51 is structured by a combination of a slinger 52 attached to a bearing inner ring 21 and rotating together with the bearing inner ring 21, and a lip member 53 slidably brought into close contact with the slinger 52 (refer to Fig. 5 in patent document 1).

The slinger 52 is made of a metal material, is structured by integrally forming an annular flat surface part 52b at one end (a right end in the drawing) in an axial direction of a tubular mounting part 52a toward an outer side (an upper side in the drawing) in a diametrical direction, and is fitted and attached to an outer peripheral surface of a bearing inner ring 21 by the tubular mounting part 52a.

The lip member 53 has a mounting ring 54, and a rubber-like elastic body 55 attached to the mounting ring 54. The mounting ring 54 is made of a metal material, is structured by integrally forming an annular flange part 54b at the other end (a left end in the drawing) in an axial direction of a tubular mounting part 54a toward an inner side (a lower side in the drawing) in a diametrical direction, and is fitted and attached to an inner peripheral surface of a bearing outer ring 22 by the tubular mounting part 54a. The rubber-like elastic body 55 integrally has an attached rubber part 55a attached to the mounting ring 54, main lips 55b and 55c supported to the attached rubber part 55a so as to be slidably brought into close contact with an inner end surface of the flat surface part 52b of the slinger 52, and an auxiliary lip 55d supported to the attached rubber part 55a in the same manner and slidably brought into close contact with an outer peripheral surface of the mounting part 52a of the slinger 52.

The sealing device 51 mentioned above inhibits a foreign material such as a muddy water or the like in a bearing outer part A from making an intrusion into a bearing inner part B, on the basis of a throwing-off operation caused by rotation of the slinger 52, and a close contact sliding motion of the main lips 55b and 55c with the slinger 52, and inhibits a lot of grease in the bearing inner part B from leaking to the bearing outer part A, on the basis of a close contact sliding motion of the auxiliary lip 55d with the slinger 52. However, torque is generated by the contact with the slinger 52, and forms resistance at a time of rotating. Further, there is generated resistance against a grease supply in a direction of the auxiliary lip 55d, at a time of supplying the grease to the main lips 55b and 55c from the bearing inner part B, and there is considered that lubricity of the main lips 55b and 55c is deteriorated. Further, there is a possibility that a turning phenomenon (a phenomenon that the auxiliary lip 55d is inverted in the axial direction) is generated in the auxiliary lip 55d brought into close contact with the slinger 52, when an axial relative displacement is generated between the slinger 52 and the lip member 53 at a time of assembling or operating, and an improvement thereof is desired.

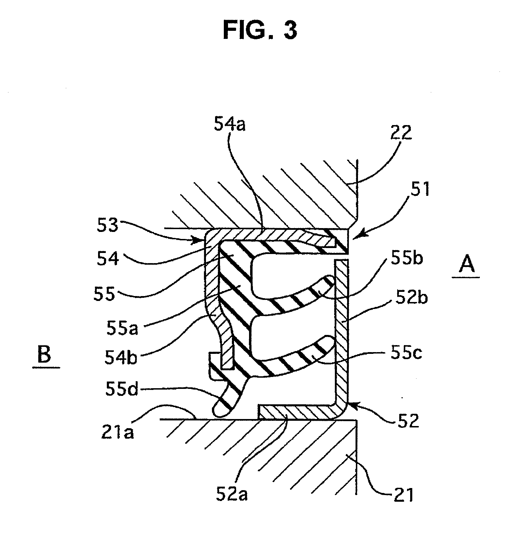

Accordingly, as shown in Fig. 3, there has been conventionally proposed an improvement countermeasure in which the auxiliary lip 55d is directly brought into close contact with an outer peripheral surface 21a of the bearing inner ring 21 in place of the slinger 52 so as to be slid (refer to Fig. 2 of patent document 1). However, in accordance with the sealing device 51 in Fig. 3, since the auxiliary lip 55d slides with respect to the bearing inner ring 21 which is not inherently expected to be slid, there is a problem that sliding torque tends to be increased, and the auxiliary lip 55d tends to be worn by sliding.

Patent Document 1: Japanese Unexamined Patent Publication No. 2004-308730

### SUMMARY OF THE INVENTION

### Problem to be Solved by the Invention

The present invention is made by taking the points mentioned above into consideration, and an object of the present invention is to provide a sealing device of PAC type or the like structured by a combination of a slinger and a lip member, in which a torque increase caused by a sliding motion of an auxiliary lip is prevented, the auxiliary lip does not form great grease supply resistance against a main lip, a turning phenomenon is not generated in the auxiliary lip, and the auxiliary lip is not worn by sliding. In addition to the above, a further object of the present invention is to provide a sealing device which can improve a sealing performance.

### Means for Solving the Problem

In order to achieve the objects mentioned above, in accordance with a first aspect of the present invention, there is provided a sealing device structured by a combination of a slinger attached to one member of two relatively rotating members, and a lip member attached to the other member, the slinger integrally having a tubular mounting part fitted and attached to the one member and an annular flat part, and the lip member having main lips slidably brought into close contact with an end surface of the flat surface part of the slinger, wherein an auxiliary lip having a labyrinth structure facing to a peripheral surface of the one member in a diametrical direction is provided at a position which is at an inner side of the main lips of the lip member and is deviated from the mounting part of the slinger in an axial direction.

Further, in accordance with a second aspect of the present invention, there is provided a sealing device as recited in the first aspect mentioned above, wherein the auxiliary lip has a pocket-like part on a surface at the main lip side.

In the sealing device in accordance with the first aspect of the present invention provided with the structure mentioned above, since the auxiliary lip having the labyrinth structure facing to the peripheral surface of the one member in the diametrical direction is provided at the position which is at the inner side of the main lips of the lip member and is deviated from the mounting part in the slinger in the axial direction, the auxiliary lip is not brought into contact with any one of the slinger and the one member fitting and attaching the slinger. Since the auxiliary lip having the labyrinth structure is constituted by a non-contact type lip seal, the auxiliary lip is not brought into contact with any one of the slinger and the one member.

Further, in addition to this, when the pocket-like part is set on the surface at the main lip side of the auxiliary lip as in the sealing device in accordance with the second aspect of the present invention, it is possible to reserve the intruding muddy water in the pocket-like part, whereby it is possible to return the muddy water to the outer side on the basis of centrifugal force caused by rotation.

### Effect of the Invention

The present invention achieves the following effects.

In the sealing device in accordance with the first aspect of the present invention, since the auxiliary lip having the labyrinth structure facing to the peripheral surface of the one member in the diametrical direction is provided at the position which is at the inner side of the main lips of the lip member and is deviated from the mounting part of the slinger in the axial direction, it is possible to structure the non-contact type lip seal which is not brought into contact with any one of the slinger and the one member, by this auxiliary lip. Accordingly, it is possible to prevent the torque from being increased by the sliding motion of the auxiliary lip, and it is possible to prevent the auxiliary lip from forming the great grease supply resistance against the main lips. Further, it is possible to inhibit the turning phenomenon from being generated in the auxiliary lip, and it is possible to inhibit the auxiliary lip from being worn by sliding.

Further, in addition to this, in the sealing device in accordance with the second aspect of the present invention, since the fluid throwing-off operation is achieved by the pocket-like part provided in the auxiliary lip, it is possible to further improve the sealing performance of the sealing device.

### BRIEF EXPLANATION OF DRAWINGS

Fig. 1 is a cross sectional view of a main part of a sealing device in accordance with an embodiment of the present invention;
Fig. 2 is a cross sectional view of a main part of a sealing device in accordance with a conventional art; and
Fig. 3 is a cross sectional view of a main part of a sealing device in accordance with another conventional art.

### Description of Reference Numerals

- 1: sealing device
- 2: slinger
- 2a, 4a: mounting part
- 2b: flat surface part
- 3: lip member
- 4: mounting ring
- 4b: flange part
- 4c: step part
- 4d: inner peripheral leading end part
- 4e: outer peripheral base end part
- 5: rubber-like elastic body
- 5a: outer peripheral rubber part
- 5b: leading end rubber part
- 5c: inner peripheral rubber part
- 5d: inner surface rubber part
- 5e: inner end rubber part
- 5f: outer surface rubber part
- 5g, 5h: main lip
- 5i: auxiliary lip
- 5j: pocket-like part
- 6, 7: labyrinth
- 21: bearing inner ring (one member)
- 21a: outer peripheral surface (peripheral surface)
- 22: bearing outer ring (other member)
- A: bearing outer part
- B: bearing inner part

### DETAILED DESCRIPTION OF PREFERRED EMBODIMENT

In this case, the following modes are included in the present invention.
(1) A grease lip of a labyrinth is provided at a part which is deviated to an inner part of a bearing from the slinger.
(2) The grease lip is inclined in a direction of an outer part of the bearing, and a pocket-like part is formed.
(3) Two end surface contact type lips are provided at an end surface side for the purpose of improving a performance against muddy water.
   In accordance with the structures (1) to (3) mentioned above, the following operations and effects can be achieved.
(4) Since the grease lip is constituted by the labyrinth, it is possible to reduce the sliding torque.
(5) Since the labyrinth is formed at the inner periphery of the grease lip, there is not generated the turning problem at a time of inserting a shaft.
(6) Further, it is possible to reserve the muddy water in the inner part by forming the pocket shape, and it is possible to expect to return the muddy water to the outer side on the basis of the centrifugal force caused by the rotation.
(7) The sliding space of two lips is broadened more than the conventional PAC type, by setting the grease lip at the part which is deviated to the inner part of the bearing from the slinger, and it is possible to set a lip length long (it is possible to achieve an increase of a fastening margin).
(8) Further, it is possible to increase an accommodating part of the grease lip.

### Embodiment

Next, a description will be given of an embodiment in accordance with the present invention with reference to the accompanying drawings.

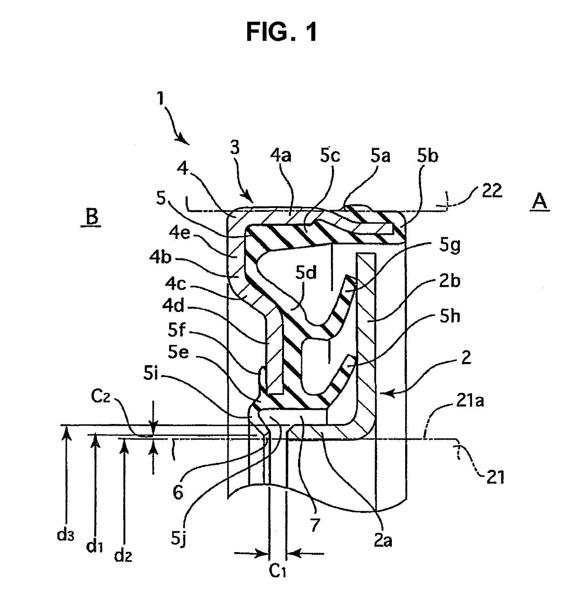

Fig. 1 shows a cross section of a main part of a sealing device 1 in accordance with the embodiment of the present invention. The sealing device 1 in accordance with the embodiment is used as a seal for a hub bearing (a hub seal) in an automotive associated field, and is structured as follows.

The sealing device (a PAC seal) 1 has a slinger 2 which is attached to a bearing inner ring 21 corresponding to one member of two relatively rotating members and rotating together with the bearing inner ring 21, and also has a lip member 3 which is attached to a bearing outer ring 22 corresponding to the other member of these two members and is slidably brought into close contact with the slinger 2. A ball body (a rolling element, not shown) of the bearing is provided in a left side of the drawing of the sealing device 1. Accordingly, a right side of the drawing corresponds to a bearing outer part A, and a left side corresponds to a bearing inner part B.

In the sealing device 1 structured by a combination of the slinger 2 and the lip member 3, first, the slinger 2 is made of a metal material such as a sheet metal or the like, is formed to have an approximately L-shaped cross section by integrally forming an annular flat surface part 2b at one end (a right end in the drawing) in an axial direction of a tubular mounting part 2a toward an outer side (an upper side of the drawing) in a diametrical direction, and is fitted and attached to an outer peripheral surface of the bearing inner ring 21 by an inner peripheral surface of the tubular mounting part 2a.

On the other hand, the lip member 3 is structured by a combination of a mounting ring (a metal ring) 4, and a rubber-like elastic body (a seal rubber) 5 attached to the mounting ring 4.

The mounting ring 4 is made of a metal material such as a sheet metal or the like, is formed to have an approximately L-shaped cross section by integrally forming an annular flange part 4b at the other end (a left end in the drawing) in the axial direction of a tubular mounting part 4a toward an inner side (a lower side of the drawing) in a diametrical direction, and is fitted and attached to an inner peripheral surface of the bearing outer ring 22 by an outer peripheral surface of the tubular mounting part 4a. An annular step part 4c is provided at the midpoint of the flange part 4b in the diametrical direction of the flange part 4b, whereby an inner peripheral leading end part 4d is arranged at the bearing outer part A side than an outer peripheral base end part 4e.

The rubber-like elastic body 5 integrally has an outer peripheral rubber part (an outer peripheral seal part) 5a attached to the outer peripheral surface of the mounting part 4a of the mounting ring 4, a leading end rubber part 5b attached to a leading end surface of the mounting part 4a, an inner peripheral rubber part 5c attached to an inner peripheral surface of the mounting part 4a, an inner surface rubber part 5d attached to an inner end surface of the flange part 4b of the mounting ring 4, an inner end rubber part 5e attached to an inner end of the flange part 4b, and an outer surface rubber part 5f attached to an outer end surface of the flange part 4b, and integrally has two main lips (a dust lip and a side lip) 5g and 5h which are slidably brought into close contact with the inner end surface of the flat surface part 2b of the slinger 2.

Further, at an inner peripheral side of the outer surface rubber part 5f, in an innermost peripheral part of the rubber-like elastic body 5, there is integrally formed an auxiliary lip (a grease lip, a radial lip) 5i having a labyrinth structure facing to the outer peripheral surface 21a of the bearing inner ring 21 in the diametrical direction, so as to be positioned at a position which is deviated to one side (a bearing inner side B) in an axial direction from the mounting part 2a of the slinger 2.

Since the auxiliary lip 5i is arranged at the position which is deviated to one side in the axial direction from the mounting part 2a of the slinger 2, an axial gap c₁ having a predetermined magnitude is set between the mounting part 2a and the auxiliary lip 5i.

Further, since the auxiliary lip 5i is formed as a non-contact labyrinth structure with respect to the outer peripheral surface 21a of the bearing inner ring 21, a diametrical gap c₂ having a predetermined magnitude is set between the outer peripheral surface 21a of the bearing inner ring 21 and the auxiliary lip 5i.

Further, an inner diameter d₁ of the auxiliary lip 5i is set to be larger than an outer diameter d₂ of the bearing inner ring 21 and smaller than an outer diameter d₃ of the mounting part 2a of the slinger 2. Accordingly, a magnitude of the diametrical gap c₂ mentioned above is set to be smaller than a thickness of the mounting part 2a.

Further, the auxiliary lip 5i is arranged at the inner peripheral side of the outer surface rubber part 5f as mentioned above, that is, arranged at the bearing inner part B side than the inner peripheral leading end part 4d of the flange part 4b of the mounting ring 4.

Further, the auxiliary lip 5i is formed in such a manner as to be inclined in the direction of the bearing outer part A as illustrated, and a pocket-like part 5j having an annular shape is formed in a surface at the main lip 5g and 5h side, that is, on a surface at the bearing outer part A side.

The sealing device 1 in accordance with the structure mentioned above is structured such as to inhibit a foreign material such as muddy water or the like in the bearing outer part A from making an intrusion into the bearing inner part B, on the basis of a throwing-off operation by the slinger 2 and a sealing operation by the main lips 5g and 5h, and inhibit a lot of grease in the bearing inner part B from leaking to the bearing outer part A, on the basis of a sealing operation (a labyrinth sealing operation) of the auxiliary lip, and is characterized in that the following operations and effects are achieved by the structure mentioned above.

First, since the auxiliary lip 5i having the labyrinth structure facing to the outer peripheral surface 21a of the bearing inner ring 21 in the diametrical direction is provided at the position which is deviated to one side in the axial direction from the mounting part 2a of the slinger 2, in the inner peripheral part of the rubber-like elastic body 5 in the lip member 3, as mentioned above, the non-contact type labyrinth seal structure which is not brought into contact with any one of the slinger 2 and the bearing inner ring 21 is structured by the auxiliary lip 5i. Accordingly, since the auxiliary lip 5i is not brought into contact with any one of the slinger 2 and the bearing inner ring 21, it is possible to prevent the torque from being increased by the sliding motion of the auxiliary lip 5i. Further, since the grease in the bearing inner part B is supplied to the main lips 5g and 5h at a suitable amount while passing through the labyrinth 6 at the inner periphery of the auxiliary lip 5i, it is possible to increase a lubricating performance of the main lips 5g and 5h. Further, since the auxiliary lip 5i is not brought into contact with the slinger 2, it is possible to inhibit the turning phenomenon from being generated in the auxiliary lip 5i at a time of assembling or operating the slinger 2 and the lip member 3. Further, the auxiliary lip 5i which is not brought into contact with any one of the slinger 2 and the bearing inner ring 21 can suppress abrasion due to sliding.

Further, since the auxiliary lip 5i is provided in such a manner as to be inclined toward the bearing outer part A, and the annular pocket-like part 5j is formed on the surface at the bearing outer part A side of the auxiliary lip 5i, it is possible to reserve the intruding muddy water in the pocket-like part 5j, and it is possible to return the reserved muddy water to the outer side on the basis of centrifugal force caused by rotation. Accordingly, the auxiliary lip 5j can not only seal the inner grease on the basis of the labyrinth seal operation, but also seal the outer muddy water on the basis of the throwing-off operation. Accordingly, it is possible to further improve the sealing performance of the sealing device 1.

Further, since a labyrinth 7 provided between the outer peripheral surface of the mounting part 2a of the slinger 2 and the inner peripheral surface of the inner end rubber part 5e is provided in adjacent, with a step part formed by the mounting part 2a, to the labyrinth (the gap) 6 provided with respect to the outer peripheral surface 21a of the bearing inner ring 21 at the inner peripheral side of the auxiliary lip 5i, a labyrinth passage is set long and in a complicated shape by these two labyrinths 6 and 7. Accordingly, it is possible to further improve the sealing performance against the muddy water or the like, by the labyrinths 6 and 7 in which the flow path is long and complicated.

Further, since the auxiliary lip 5i is arranged at the position which is deviated to the bearing inner part B side from the mounting part 2a of the slinger 2 as mentioned above, it is possible to enlarge the sliding space of the main lips 5g and 5h in comparison with the conventional sealing device (the PAC seal). Accordingly, it is possible to set the lip length of the main lips 5g and 5h long, and it is possible to increase the fastening margin. Further, since it is possible to enlarge the installing space of the auxiliary lip 5i, it is possible to install the auxiliary lip 5i which is large in size and has large sealing force (throwing-off operation). Therefore, it is accordingly possible to improve the sealing performance of the sealing device 1.

## Claims

1. A sealing device (1) structured by a combination of a slinger (2) attached to one member (21) of two relatively rotating members (21, 22), and a lip member (3) attached to the other member (22), said slinger (2) integrally having a tubular mounting part (2a) fitted and attached to said one member (21) and an annular flat part (2b), and said lip member (3) having main lips (5g, 5h) slidably brought into close contact with an end surface of the flat surface part (2b) of said slinger (2), wherein an auxiliary lip (5i) having a labyrinth structure facing to a peripheral surface (21a) of said one member (21) in a diametrical direction is provided at a position which is at an inner side of the main lips (5g, 5h) of said lip member (3) and is deviated from the mounting part (2a) of said slinger (2) in an axial direction.

2. A sealing device as claimed in claim 1, wherein the auxiliary lip (5i) has a pocket-like part (5j) on a surface at the main lip (5g, 5h) side.
